# EUROPÄISCHE PATENTSCHRIFT

(11) **EP 1 604 565 B1**
(45) Veröffentlichungstag und Bekanntmachung des Hinweises auf die Patenterteilung: **05.03.2008**
(21) Anmeldenummer: 05010838.0
(22) Anmeldetag: 19.05.2005
(51) Int. Cl.: A01F 15/08

(54) **Ballenablagesystem**
Bale delivery system
Système de pose pour balles

(30) Priorität: 09.06.2004 DE 102004027895
(43) Veröffentlichungstag der Anmeldung: 14.12.2005
(73) Patentinhaber: CLAAS Selbstfahrende Erntemaschinen GmbH, 33428 Harsewinkel (DE)
(72) Erfinder: Degen, Peter, Dr., 48336 Sassenberg (DE)

(56) Entgegenhaltungen:
- US-A- 2 672 808
- US-A- 4 215 964
- US-B1- 6 240 712

## Beschreibung

Die zugrundeliegende Erfindung betrifft ein Ballenablagesystem für landwirtschaftliche Ballenpressen gemäß dem Oberbegriff des Anspruchs 1.

Herkömmliche landwirtschaftliche Ballenpressen nehmen das zu einem Schwad auf dem Feldboden abgelegte Erntegut wie z.B. Stroh, Heu oder Silage auf, verdichten es in der Presskammer zu einem Ballen und stoßen diesen Ballen unmittelbar nach der Fertigstellung wieder aus der Presskammer aus. Dies führt dazu, dass die fertigen Ballen willkürlich auf dem Feldboden und über das gesamte Feld in Abhängigkeit von einer meist umständlich vom Fahrer gewählten Fahrtroute zur Aufnahme des Schwads verteilt abgelegt werden.

In der EP 0 771 522 B1 wird eine Quaderballenpresse mit einer im rückwärtigen Bereich der Quaderballenpresse zur schonenden Ablage der Ballen angeordneten und mehrteilig ausgeführten Ablagevorrichtung offenbart. Die Ablage der Ballen erfolgt unmittelbar nach der Bindung des fertigen Ballens.
Die DE 26 56 896 zeigt eine Rundballenpresse in der Ausführung einer Festkammerpresse. Hier erfolgt die Ablegung des fertigen Rundballens nach dem Erreichen einer zuvor eingestellten Ballendichte und der sich hieran anschließenden Umwickelung des Rundballens
Schließlich offenbart die DE 689 06 068 T2 eine Rundballenpresse in der Ausführung einer Riemenpresse. Bei dieser Form der Ballenpresse wird der Ballen dann auf das Feld abgelegt, sobald der Bindevorgang ausgelöst bzw. die zuvor eingestellte Ballengröße erreicht wird. Die Größe des Ballens selbst ist im Gegensatz zur Ballendichte variabel.

Allen diesen landwirtschaftlichen Ballenpressen ist gemein, dass sie keine Möglichkeit der systematischen und räumlich vereinheitlichten Ballenablage bieten. Vielmehr wird der jeweilige Ballen unmittelbar nach der Bindung aus dem Pressraum heraus auf den Feldboden abgelegt, so dass sich der daran anschließende Ballensammelvorgang und der Abtransport der Ballen umständlich und zeitintensiv gestaltet.

Aus der US 6,240,712 B1 ist es bekannt, einen bereits fertiggestellten Rundballen auf einem der Rundballenpresse zugeordneten Stützrahmen zwischenzuspeichern und so eine Ablage von bis zu zwei Ballen in räumlicher Nähe zueinander zu ermöglichen. Eine Möglichkeit zur systematischen Ballenablage in Abhängigkeit von jeweils unterschiedlichen Erntebedingungen ist durch einen derart bekannten Ballenspeicher jedoch nicht gegeben.

Es ist daher Aufgabe der zugrundeliegenden Erfindung ein System zur Ablage von durch eine landwirtschaftliche Ballenpresse geformte Ballen zu schaffen, welches eine optimale Ballenablagestrecke anhand unterschiedlicher Arbeitsparameter erstellt und in Abhängigkeit hiervon die Ablage mehrerer Ballen in unmittelbarer Nähe zueinander vornimmt.

Diese Aufgabe wird durch die kennzeichnenden Merkmale des Anspruchs 1 gelöst.

Dadurch, dass das Ballenablagesystem die Ablage wenigstens eines Ballens in der unmittelbaren Nähe eines bereits auf dem Feldboden abgelegten Ballens umfasst, wird durch die unmittelbare örtliche Nähe der abgelegten Ballen zueinander eine Zeit- und Kostenoptimierung bei der Ballenernte erreicht, da die für den Abtransport der Ballen zurückzulegenden Wege erheblich verkürzt werden.

Indem das Ballenablagesystem eine dynamische Anpassung der Ballenablagestrecke innerhalb des Feldes vornimmt, können unterschiedliche Rahmen- und Erntebedingungen, wie beispielsweise ein uneinheitlich abgelegter Schwad, in die Berechnung der Ballenablagestrecke mit einfließen, so dass die optimale Ballenablagestrecke stets in Abhängigkeit von den aktuellen und tatsächlichen Feldbedingungen berechnet wird.

Die Ablage der Ballen in Ballenkorridore oder in Ballennestern ermöglicht einen schnellen Abtransport der Ballen von dem Feld, da so die Ballen unabhängig von der Feldform nah zueinander abgelegt werden.

Durch die von dem Ballenablagesystem ermittelte Ballenablagestrecke wird die Breite des Ballenkorridors und die Ausdehnung der Ballennester bestimmt, so dass die Ballenkorridore möglichst schmal und die Ausdehnung der Ballennester gering gehalten wird, so dass ein zeitsparender Abtransport gewährleistet ist.

Zur Unterstützung der Ermittlung der optimalen Ballenablagestrecke, kann die Ballenablagestrecke in Abhängigkeit von Grenzwerten bestimmt werden, wobei die Grenzwerte die Ballengeometrie, die Ballendichte und/oder die Oberflächenstruktur des Feldes erfassen. Durch die Veränderung der Ballendichte sowie der Ballengeometrie kann der Ablagezeitpunkt bestimmt werden, so dass ein Ballen früher abgelegt werden kann, um eine optimale Ablagestelle innerhalb eines Ballennestes oder innerhalb eines Ballenkorridors zu erhalten. In Abhängigkeit hiervon verändert sich auch die Länge der Ballenablagestrecke.

Durch die Editiertbarkeit der Grenzwerte können ständig wechselnde Erntebedingungen hinreichend berücksichtigt werden. So lässt sich feuchtes Erntegut stärker verdichten als trockenes Erntegut, was Auswirkungen auf den Ballenbildungsprozess hat und bei der Ballenernte beachtet werden muss.

Indem der Ballenpresse eine Ballensammelvorrichtung zugeordnet ist und die Ballensammelvorrichtung in den Ballenkorridoren und/oder in den Ballennestern entleert wird, wird eine zusätzliche Reduzierung der Transportwege innerhalb des Feldes erreicht, da so mehrere Ballen übereinander abgelegt und längere Wege, ohne Ablage eines Ballens, zurückgelegt werden können.

Zur genaueren Berechnung der Ballenablagestrecke können unterschiedliche Parameter hinzugezogen werden. Insbesondere Daten, wie die auf dem Feldboden abgelegte Schwadmenge, die örtliche Position eines bereits abgelegten Ballens, Ertrags- und Feldkartierungsdaten und/oder das Bodenniveau des Feldes fließen unmittelbar in die Planung der Ballenablagestrecke mit ein, so dass in Abhängigkeit von diesen Parametern das Ballenablagesystem den Ort der Ballenablage berechnet. Insbesondere durch die Erkennung des Bodenniveaus des Feldes wird verhindert, dass beispielsweise ein Rundballen auf einer rechnerisch zwar optimalen Stelle abgelegt wird, jedoch aufgrund von Bodenneigung bzw. Bodenunebenheiten von dieser Stelle nach der Ablage weg rollt.

Indem die Ablage der Ballen selbsttätig vorgenommen wird, wird der Fahrer des die Ballenpresse ziehenden Schleppers entlastet. Andererseits hat er jederzeit die Möglichkeit in den Ablagemodus korrigierend einzugreifen und auf diese Weise manuell eine für ihn geeignete Ablage einzuleiten.

Dadurch, dass dem Ballenablagesystem wenigstens eine Sendeeinheit und eine Empfangseinheit zur Bereitstellung von feldspezifischen Daten zugeordnet ist, wobei das Ballenablagesystem die Ermittlung der Ballenablagestrecke in Abhängigkeit von den in der Empfangseinheit hinterlegten Daten ermittelt und die Positionen der abgelegten Ballen speichert, wird eine effiziente und einheitliche Ballenablage über das gesamte Feld erreicht.

Weitere vorteilhafte Ausgestaltungen sind Gegenstand weiterer Unteransprüche und werden nachfolgend anhand von Zeichnungen näher erläutert.

Es zeigen:
- Figur 1:: eine schematische Darstellung einer Erntefahrt und dargestellter Ballenablagestrecke
- Figur 2:: in Seitenansicht ein Zusammenschnitt einer Festkammerrundballenpresse und einer Riemenrundballenpresse
- Figur 3:: in Seitenansicht eine an einem Schlepper adaptierte Quaderballenpresse mit einer Ballensammelvorrichtung

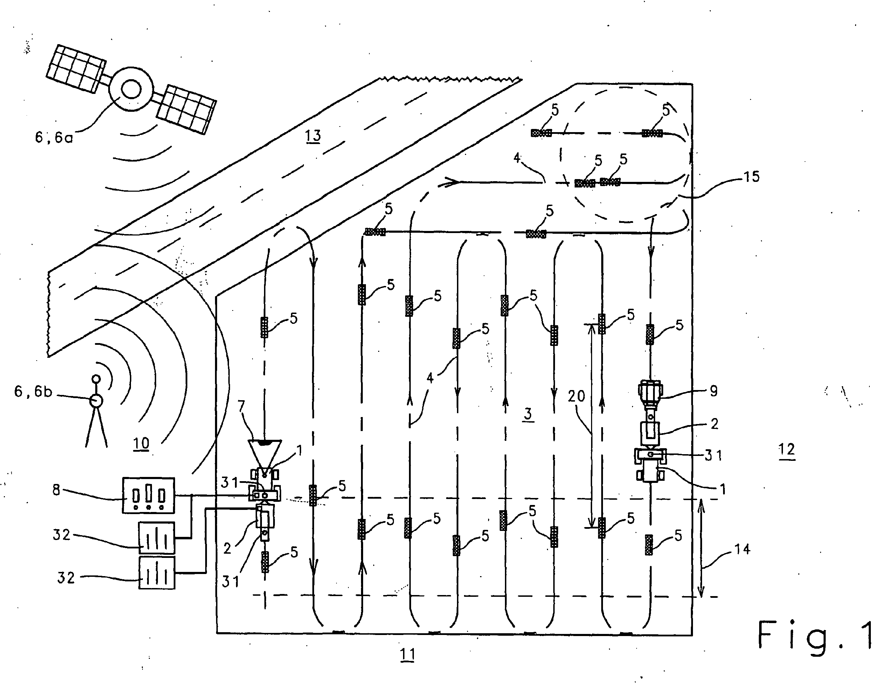

In der Figur 1 ist schematisch die Erntefahrt einer an einem Schlepper 1 adaptierten landwirtschaftlichen Ballenpresse 2 dargestellt. Die Fahrtroute der Ballenpresse 2 ist anhand von Strichlinien in Pfeilrichtung gekennzeichnet. Die Ballenpresse 2, die als Rund- oder Quaderballenpresse ausgeführt sein kann, nimmt den auf dem Feld 3 abgelegten Schwad 4 auf und formt hieraus einen Ballen 5. Der gepresste Ballen 5 wird dann auf dem Feldboden 3 abgelegt.

Ein wie in Figur 1 dargestelltes Feld 3 ist meist mehrere 100 Meter breit und lang. Daher ist ein erheblicher Zeitaufwand notwendig, um die über das gesamte Feld 3 verteilten Ballen 5 einzusammeln und zum Abtransport an einer Stelle nebeneinander oder übereinander abzulegen. Um diese zusätzliche Belastung zu umgehen, ermöglicht das erfindungsgemäße Ballenablagesystem die Ballen 5 während der Ballenernte in unmittelbarer Nähe zueinander abzulegen. Hierzu bietet es sich an, die Ballen 5 innerhalb eines Ballenkorridors 14 oder auf mehreren koordinierten Ballennestern 15 abzulegen. Die Breite des Ballenkorridors 14 und die Ausdehnung der Ballennester 15 hängen dabei von der durch das Ballenablagesystem ermittelten optimalen Ballenablagestrecke ab, wobei die Ballenablagestrecke selbst in Abhängigkeit von definierten Grenzwerten bestimmt werden kann. Als Grenzwerte dienen dabei die Ballengeometrie und/oder die Ballendichte, wobei die Ballengeometrie den Ballendurchmesser, den Ballenquerschnitt und/oder die Ballenlänge umfasst. In Abhängigkeit von diesen Grenzwerten erfolgt die Auslegung des Ballenkorridors 14.

Außerdem ist es für eine effiziente Erntefahrt wichtig den Beginn der Erntefahrt auf dem Feld 3, die Fahrtrichtung sowie die Reihenfolge der Aufnahme des Schwads 4 zu kennen und festzulegen. Hierzu muss der Schlepper 1 bzw. die Ballenpresse 2 mit den hierfür erforderlichen Daten, wie Feldgröße (Feldlänge und -breite) oder Schwadmenge, örtliche Position des Schwads 4, örtliche Position eines bereits abgelegten Ballens 5 oder dem Bodenniveau des Feldes 3 versorgt werden.
Da die Schwadablage auf dem Feld 3 in allgemein bekannter Weise während der Erntefahrt mit einem Mähdrescher erfolgt, indem die Erntegutstängel aus dem hinteren Bereich des Mähdreschers nach erfolgtem Ausdrusch aus dem Mähdrescher hinaus gefördert und unmittelbar auf dem Boden abgelegt werden, können die Daten über den Verlauf des Schwads 4 und der Schwadmenge bei der Erntefahrt ermittelt werden. Hierzu speichert eine in dem Mähdrescher integrierte Elektronik den Erntefahrtweg des Mähdreschers. Aus dem Erntefahrtweg des Mähdreschers lässt sich wiederum erkennen, welchen Verlauf der auf dem Feldboden 3 abgelegte Schwad 4 hat. Diese Daten werden abgespeichert und dem Ballenablagesystem zur Verfügung gestellt. Außerdem können die Ertragskartierungsdaten in ein Terminal 8 abgelegt werden, so dass alle konkreten feldspezifischen Daten und die Lage des Feldes 3 zu anderen benachbarten Feldern 10, 11, 12 oder öffentlichen Straßen 13 abrufbar sind. Anhand der kartierten Ertragsmenge, können wiederum Rückschlüsse auf die auf dem Boden abgelegte Schwadmenge gezogen werden, so dass die noch zu bearbeitende und vor dem Schlepper 1 liegende Schwadmenge sowie die Lage des Schwads 4 auf dem Feld 3 bekannt ist. Darüber hinaus wäre auch eine Lenkung des Schleppers 1 oder der Presse 2 in Abhängigkeit von Signalen 6a eines GPS Systems 6 oder einer stationären Sendeeinheit 6b denkbar.
Sämtliche Daten fließen unmittelbar in die Planung der Ballenablagestrecke 20 ein, so dass das System erkennt, zu welchem Zeitpunkt und an welcher Stelle des Feldes 3 der nächste Ballen 5 abgelegt werden sollte. Darüber hinaus bekommt jeder abgelegte Ballen 5 eine GPS Position zugeordnet. Durch die Erkennung des nächsten Ablagezeitpunktes und der nächsten Ablagestelle wird eine Fahrtroute erstellt, mit der Maßgabe möglichst viele Ballen 5 in unmittelbarer Nähe zueinander abzulegen.
Auf diese Weise bestimmt die festgelegte Ballenablagestrecke 20 die Breite der Ballenkorridore 14 sowie die Ausdehnung der Ballennester 15 auf dem Feld 3.

Ferner ist es vorstellbar die Felddaten mit anderen Vorrichtungen zu ermitteln. So kann der vor dem Schlepper 1 abgelegte Schwad 4 unter Zuhilfenahme eines allgemein bekannten Laserabtastsystems 7 erfasst und ausgewertet werden. Der so ermittelte Verlauf des Schwads 4 fließt als weiterer Parameter in die Berechnung der optimalen Ballenablagestrecke 20 ein. Demgemäss berechnet eine geeignete Software die für die Pressung eines Ballens 5 zurückzulegende Fahrtstrecke anhand des aktuell vor dem Schlepper 1 liegenden Schwads 4. Das heißt, steht aufgrund der Berechnung fest, dass für die Fertigstellung eines Ballens 5 eine bestimmte Fahrtstrecke zur Aufnahme des darauf abgelegten Schwads 4 zurückgelegt werden muss, wird diese Fahrtstrecke durch das Ballenablagesystem zu der spezifischen Feldgröße ins Verhältnis gesetzt. In Abhängigkeit von dem Verhältnis Feldgröße und Schwadmenge zu der ermittelten Fahrtstrecke, erstellt das Ballenablagesystem eine Ballenablagestrecke 20, wobei die für die Pressung eines Ballens 5 zurückzulegende Fahrtstrecke und die auf dieser Fahrtstrecke aufzunehmende Schwadmenge der Berechnung der optimalen Ballenablagestrecke 20 zugrundelegt wird, so dass das Ballenablagesystem die Position der abzulegenden Ballen 5 ermittelt und hieraus die Ablageposition der Ballen 5 in der unmittelbaren Nähe zueinander berechnet.
Sollte sich ergeben, dass die Ablage der Ballen 5 aufgrund der zuvor festgelegten Ballengröße nicht in unmittelbarer Nähe zueinander erfolgen, so wird der Fahrer über das in dem Schlepper 7 angeordnete Terminal 8 hierauf aufmerksam gemacht.
Ergibt sich hierbei, dass die Fahrtstrecke zu dem nächsten auf dem Feld 3 abgelegten Ballen 5 zu kurz für eine Ablage in der unmittelbaren Nähe eines weiteren Ballens 5 ist und die Ablage dieses Ballens 5 damit erst zu einem späteren Zeitpunkt und zwangsweise auch weiter von dem bereits abgelegten Ballen 5 beabstandet erfolgen würde, hat der Fahrer außerdem die Möglichkeit regulierend in die bereits festgelegte Ballenablagestrecke 20 einzugreifen, indem der Fahrer manuell die Bindung und Ablage eines kleineren Ballens 5 vorzeitig einleitet, um den Ballen 5 so in der Nähe anderer Ballen 5 zu platzieren.

Das Ballenablagesystem kann aber auch so ausgelegt werden, dass das System selbständig erkennt, wann eine günstige Ballenablage erfolgen würde, so dass automatisch eine vorzeitige Ablage eines Ballens 5 eingeleitet wird.

Erfolgt eine Regulierung des Fahrers hinsichtlich der Ballenablagestrecke 20, speichert das Ballenablagesystem diesen Eingriff und berücksichtigt den Eingriff bei der weiteren Planung der Ballenablagestrecke 20.

Durch die von dem Ballenablagesystem ermittelte Ballenablagestrecke wird die Lage und Breite des Ballenkorridors 14 sowie die Lage und Ausdehnung der Ballennester 15 bestimmt, wobei die Korridorbreite und die Ausdehnung der Ballennester gering gehalten werden soll.

Zur Ermittlung der optimalen Ballenablagestrecke 20 kann die Ballenablagestrecke 20 in Abhängigkeit von Grenzwerten, wie beispielsweise der Ballengeometrie und der Ballendichte, wobei die Ballengeometrie den Ballendurchmesser, den Ballenquerschnitt und die Ballenlänge umfasst, bestimmt werden. Indem während des Pressvorgangs die Ballendichte oder Ballengeometrie verändert wird, kann der Zeitpunkt der Fertigstellung eines Ballens 5 und damit auch der Ablageort bestimmt werden, um auf diese Weise eine unmittelbare Zuordnung zu einem bereits abgelegten Ballen 5 herzustellen, obgleich der Pressvorgang zur Herstellung eines zuvor definierten Ballens 5 mit einer bestimmten Größe noch nicht beendet ist.
Die Ballendichte, der Ballendurchmesser, der Ballenquerschnitt und die Ballenlänge sind wiederum in Abhängigkeit von der Ballenpressenausführung einstellbar.

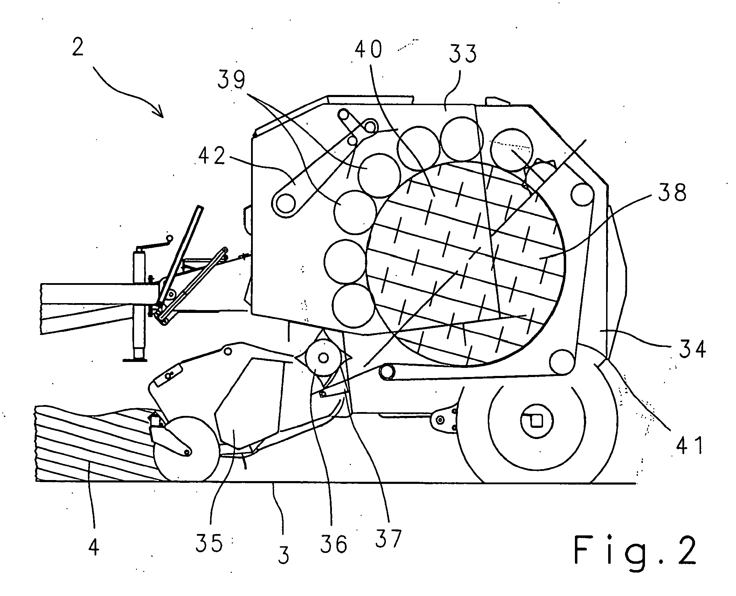

Figur 2 zeigt in Seitenansicht einen Teilquerausschnitt einer Festkammer- 33 und Riemenrundballenpresse 34. Die Ballenpresse 2, 33, 34 nimmt mit einer Aufnahmevorrichtung 35 den Schwad 4 vom Feld 3 auf und fördert das Pressgut an einem Schneidrotor 36 und an Schneidmessern 37 vorbei in den Ballenraum 38.
Der Ballenraum 38 der Festkammerpresse 33 wird umfangsseitig von Ballenformungselementen 39, vorliegend in Form von zylindrischen Walzen, begrenzt. Die Ballenformungselemente 39 sind drehbar und angetrieben gelagert. Durch die ortsfeste Anordnung der Ballenformungselemente 39 kann der Rundballen 40 nicht in seiner Größe verändert werden. Jedoch kann über eine Veränderung des Ballendrucks eine Veränderung der Ballendichte erzielt werden, so dass für die Formung eines Ballens 40 mit einer höheren Ballendichte und einem zuvor eingestellten Gewicht von beispielsweise 800 kg eine längere Fahrtstrecke für die Schwadaufnahme zurückgelegt werden kann als für einen Ballen 5 mit einem eingestellten Gewicht von 700 kg.

Im Gegensatz zu der Festkammerpresse 33 kann der Ballendurchmesser bei einer Riemenpresse 34 verändert werden. Umfangsseitig ist der Pressraum 38 der Riemenpresse 34 durch Endlosbänder 41 begrenzt, die von einem Schwenkarm 42 angesteuert werden, wobei die Bänder 41 gegen den Druck des beim Wickelvorgang anwachsenden Ballens 40 ausweichen. Die Bänder 41 selbst sind angetrieben und umschließen das Pressgut bereits unmittelbar nach der Zuführung in die Ballenkammer 38. So wird ein Ballen 40 frühzeitig mit einer konstanten Bänderspannung und daher nicht veränderbaren Ballendichte geformt. Aus diesem Grund ist es möglich variable Ballen 40 mit unterschiedlichem Ballendurchmesser und annähernd gleicher Ballendichte zu formen und jederzeit nach erfolgter Bindung auf dem Feld 3 abzulegen.
Demzufolge kann die Ballenablagestrecke 20 in Bezug auf die Auslegung des Ballenkorridors 14 sehr flexibel gestaltet werden, da der Zeitpunkt des Bindens und der Ablage des Ballens 40 jederzeit bestimmt werden kann.

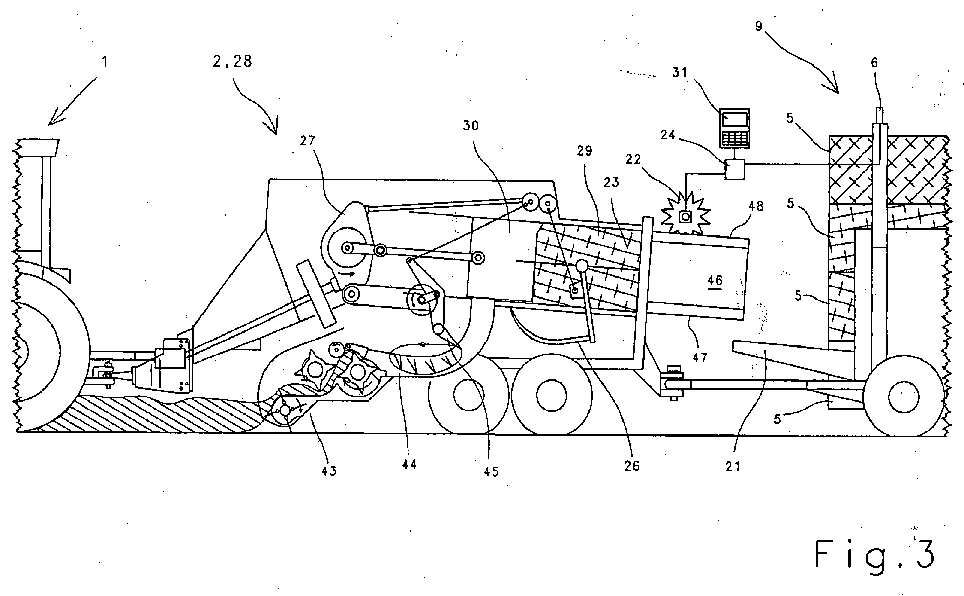

In der Figur 3 ist eine an einem Schlepper adaptierte Quaderballenpresse 28 mit einer Ballensammelvorrichtung 9 dargestellt. Bei der Quaderballenpresse 28 kann die Ballengeometrie und die Ballendichte verändert werden.
Zunächst wird das Erntegut über eine Aufnahmevorrichtung 43 in den Zuführkanal 44 gefördert, in dem das Erntegut von einem Rafferzinken 45 vorverdichtet und durch einen Ladehub dem Presskanal 29 zugeführt wird. In dem Presskanal 29 wird das Erntegut 23 durch einen sich hin und her bewegenden Presskolben 30 beaufschlagt und zu einem Ballen 5 verdichtet.
Die Länge des in dem Presskanal 29 geformten Ballens 5 kann über ein in die Ballenrutsche 21 integriertes Strohrad 22, ermittelt werden. Die Längenermittlung des Erntegutstrangs 23 erfolgt dadurch, dass die Spitzen des Strohrades 22 in den darunterliegenden Ballen 5 eindringen und der Ballen 23 durch seine Bewegung das Strohrad 22 antreibt.
Auf diese Weise wird die Länge des Ballens 23 von dem Strohrad 22 abgefühlt. Das Strohrad 22 ist dabei mit einer Auswertelektronik 24 verbunden, die die Längenimpulse des Strohrads 22 empfängt und zu einem Ist-Längenwert der erreichten Länge eines Erntegutstrangs 23 aufaddiert. Erreicht nun der Ist-Längenwert einen Wert, der mit einem optimalen Ballenablagepunkt innerhalb der Ballenablagestrecke 20 korrespondiert, so schaltet die Auswertelektronik 24 mit einem Signal eine nicht abgebildete Kupplung ein, durch die die Bindeeinrichtung 25 mit dem Knoter und der Bindenadel 26 mit dem Hauptgetriebe 27 antriebsverbunden wird. Die Bindenadel 26 fördert dann das Bindegarn durch den Erntegutstrang hindurch zu dem Knoter, wo der Erntegutstrang 23 zu einem fertigen Quaderballen 23 gebunden und abgeschnitten wird. Demzufolge werden längere oder kürzere Ballen 23 gebunden und abgelegt.
Außerdem kann in Abhängigkeit von dem Ergebnis der Ballenlängenmessung festestellt werden, welche tatsächliche Strecke für die Pressung dieses Ballens 23 zurückgelegt wurde und insgesamt für die Pressung eines Ballens 5 notwendig ist. Dieser Wert kann als Parameter in die weitere Berechnung der Ballenablagestrecke 20 mit einfließen. Hierdurch wird gewährleistet, dass die Berechnung der Ballenablagestrecke 20 dynamisch erfolgt, so dass uneinheitlich abgelegte Schwadmengen keine Beeinträchtigung in der Berechnung darstellen.

Zur flexibleren Handbarkeit der Ballenablage kann der Fahrer des Schleppers 1 über eine Eingabevorrichtung 31 korrigierend in den Ballenablagemodus eingreifen und den Ablagezeitpunkt und die Ablagestelle des Ballens 23 bzw. die Breite des Ballenkorridors 14 oder die Ausdehnung der Ballennester 15 bestimmen.
Zudem kann durch bewegbare Seitenwände 46, einen bewegbaren Presskammerboden 47 oder Presskammerdecke 48 die Dichte des Quaderballens 23 erhöht werden, indem diese Organe 46, 47, 48 in den Presskanal 29 hineingestellt werden und während der Pressung gegen den Ballen 23 wirken. Auch wird hierdurch der Quaderballen 23 der Breite wie auch der Höhe nach verkleinert.

Im Rahmen der Erfindung ist es außerdem denkbar der Quaderballenpresse 28 eine allgemein bekannte Ballensammelvorrichtung 9 anzuhängen. Die Ballensarnrnelvorrichtung 9 nimmt die gepressten Ballen 5 unmittelbar von der Quaderballenpresse 28 auf, ohne dass diese zuvor auf dem Boden abgelegt werden. Die Ballensammelvorrichtung 9 kann gleichzeitig mehrere Ballen 5 aufnehmen und übereinander stapeln. Ist die Ballensammelvorrichtung 9 mit Ballen 5 gefüllt, werden die Ballen 5 gestapelt auf den Feldboden 3 abgelegt. Bekannt sind Ballensammelvorrichtungen 9, die bis zu vier Ballen 5 aufnehmen und übereinander stapeln.
Die Verbindung der Ballensammelvorrichtung 9 mit einer Quaderballenpresse 28 lässt eine noch optimiertere Ablage der Ballen 5 zu, indem die Ballensammelvorrichtung 9 in dem Ballenkorridor 14 oder dem Ballennest 15 entleert wird. So reduzieren sich einerseits die Ballenablagepunkte auf dem Feld 3, da nun mehrere Ballen 5 übereinander gestapelt werden und insgesamt eine längere Fahrtstrecke ohne Ballenablage zurückgelegt werden kann. Durch die Flexibilität, die durch die Aufnahme von mehreren Ballen 5 geschaffen wird, kann das Ballenablagesystem eine Ballenablagestrecke 20 berechnen, auf der, ausgehend von dem Beispiel einer vierfach Aufnahme von Ballen 5, zwischen 1 und 4 Ballen auf einer Stelle abgelegt werden können. Das heißt, erkennt das System, dass aufgrund der noch aufzunehmenden Schwadmenge und der tatsächlich in der Ballensammelvorrichtung 9 aufgenommenen Ballen 5 eine Ablage zum nächstmöglichen Zeitpunkt, also innerhalb des Ballenkorridors 14 oder des Ballennestes 15, zweckmäßig ist, wird die Ballensammelvorrichtung 9 entleert. Die unterschiedliche Anzahl der Ballen 5, die innerhalb eines Ballenablagekorridors 14 abgelegt werden können, kann dabei aus der unterschiedlichen Breite oder Länge des Feldes 3 sowie aus der unterschiedlichen Schwadstärke resultieren. Das Ballenablagesystem verarbeitet diese Daten und merkt sich die Positionen sowie die Summe der bereits abgelegten Ballen 5 auf dem Feld 3. In Abhängigkeit hiervon werden an den geeigneten Sammelpunkten innerhalb der Ballenablagestrecke 20 Ballennester 15 und/oder Ballenkorridore 14 gebildet, um so eine vereinheitlichte Ballenablage auf dem Feld 3 zu gewährleisten, wodurch der Abtransport der Ballen 5 vereinfacht wird.
Ein wesentlicher Vorteil bei der Erntefahrt mit einer Ballensammelvorrichtung 9 ist, dass die in der Ballensammelvorrichtung 9 gesammelten Ballen 5 die identische Ballengeometrie aufweisen. So können wenigstens drei homogene Ballen 5 gepresst und in der Ballensammelvorrichtung 9 abgelegt werden, bevor der vierte Ballen 5 - soweit dies gemäß der geplanten Ballenstrecke 20 erforderlich ist - vor der Erreichung der optimalen Größe gebunden und mit den anderen drei Balten 5 abgelegt wird.

Als weiterer Parameter für die Bildung der Ballennester 15 oder der Ballenablagekorridore 14 kann das Ladevolumen des Erntewagens herangezogen werden. So bestimmt die Aufnahmekapazität des Erntewagens die Stückzahl der in einem Ballennest 15 abzulegenden Ballen 5.

Es liegt im Rahmen des Könnens eines Fachmanns die hier am Beispiel eines von Ballenpressen beschriebene Erfindung auf beliebige landwirtschaftliche. Arbeits- oder Erntemaschinen zu übertragen, deren Aufgabe es ist, stückiges Erntegut zu ernten und an geeigneten Stellen abzulegen, wie es beispielsweise auch bei Rübenrodern der Fall ist.

### Bezugszeichenliste:

- 1: Schlepper
- 2: Ballenpresse
- 3: Feld
- 4: Schwad
- 5: Ballen
- 6: GPS System
- 6a: GPS Satellit
- 6b: Stationäre Sendeeinheit
- 7: Laserabtastsystem
- 8: Terminal
- 9: Ballensammelvorrichtung
- 10: Feld
- 11: Feld
- 12: Feld
- 13: Straße
- 14: Ballenablagekorridor
- 15: Ballennest
- 20: Ballenablagestrecke
- 21: Ballenrutsche
- 22: Strohrad
- 23: Erntegutstrang
- 24: Auswertelektronik
- 25: Bindeeinrichtung
- 26: Bindenadel
- 27: Hauptgetriebe
- 28: Quaderballenpresse
- 29: Presskanal
- 30: Presskolben
- 31: Empfangseinheit
- 32: Auswerteelektronik
- 33: Festkammerpresse
- 34: Riemenpresse
- 35: Aufnahmevorrichtung
- 36: Schneidrotor
- 37: Schneidmesser
- 38: Ballenraum
- 39: Ballenformungselemente
- 40: Rundballen
- 41: Endlosband
- 42: Schwenkarm
- 43: Aufnahmevorrichtung
- 44: Zuführkanal
- 45: Rafferzinken
- 46: Seitenwände
- 47: Presskanalboden
- 48: Presskanaldecke

## Patentansprüche

1. Ballenablagesystem zur Ablage von Ballen (5) einer landwirtschaftlichen Ballenpresse (2) auf einem Feld (3), wobei das Ballenablagesystem die Ablage wenigstens eines Ballens (5) in der unmittelbaren Nähe zumindest eines weiteren auf dem Feldboden (3) abgelegten Ballens (5) umfasst,
**dadurch gekennzeichnet, dass**
das Ballenablagesystem eine dynamische Anpassung der Ballenablagestrecke (20) auf dem Feld (3) umfasst.

2. Ballenablagesystem nach Anspruch 1,
**dadurch gekennzeichnet, dass**
die Ballen (5) innerhalb eines Ballenkorridors (14) und/oder in Ballennestern (15) abgelegt werden.

3. Ballenablagesystem nach einem oder mehreren der vorangegangenen Ansprüche,
**dadurch gekennzeichnet, dass**
die Breite des Ballenkorridors (14) und die Ausdehnung der Ballennester (15) von der Ballenstrecke (20) abhängt.

4. Ballenablagesystem nach einem oder mehreren der vorangehenden Ansprüche,
**dadurch gekennzeichnet, dass**
die Ballenablagestrecke (20) von Grenzwerten abhängt.

5. Ballenablagesystem nach einem oder mehreren der vorangegangenen Ansprüche,
**dadurch gekennzeichnet, dass**
die Grenzwerte die Ballengeometrie und/oder die Ballendichte sind.

6. Ballenablagesystem nach einem oder mehreren der vorangegangenen Ansprüche,
**dadurch gekennzeichnet, dass**
die Ballengeometrie den Ballendurchmesser und/oder den Ballenquerschnitt und/oder die Ballenlänge umfasst.

7. Ballenablagesystem nach einem oder mehreren der vorangegangenen Ansprüche,
**dadurch gekennzeichnet, dass**
das die Grenzwerte editierbar sind.

8. Ballenablagesystem nach einem oder mehreren der vorangegangenen Ansprüche,
**dadurch gekennzeichnet, dass**
der Ballenpresse (2) eine Ballensammelvorrichtung (9) zugeordnet ist und die Ballensammelvorrichtung (9) in den Ballenkorridoren (14) und/oder in den Ballennestern (15) entleert wird.

9. Ballenablagesystem nach einem oder mehreren der vorangegangenen Ansprüche,
**dadurch gekennzeichnet, dass**
die Ballenablagestrecke (20) in Abhängigkeit von unterschiedlichen Parametern ermittelt wird.

10. Ballenablagesystem nach Anspruch 9,
**dadurch gekennzeichnet, dass**
die Parameter die auf dem Feldboden abgelegte Schwadmenge, die örtliche Position des Schwads, die örtliche Position eines bereits abgelegten Ballens (5), die Ertrags- und/oder Feldkartierungsdaten und/oder das Bodenniveau des Feldes (3) sind.

11. Ballenablagesystem nach Anspruch 9,
**dadurch gekennzeichnet, dass**
die Ballenablage in Abhängigkeit von den Parametern selbsttätig oder manuell erfolgt.

12. Ballenablagesystem nach einem oder mehreren der vorangegangenen Ansprüche,
**dadurch gekennzeichnet, dass**
dem Ballenablagesystem wenigstens eine Sendeeinheit (6, 6a, 6b) und Empfangseinheit (31, 8) zum Empfang von Daten zugeordnet ist, wobei das Ballenablagesystem die Ermittlung der Ballenablagestrecke (20) in Abhängigkeit von den in der Empfangseinheit (31, 8) hinterlegten Daten ermittelt und die Positionen der abgelegten Ballen (5) speichert.

13. Ballenablagesystem nach Anspruch 12,
**dadurch gekennzeichnet, dass**
die Sendeeinheit (6) GPS Satelliten (6a) und/oder stationäre Sendeeinheiten (6b) sind.

14. Ballenablagesystem nach einem oder mehreren der vorangegangenen Ansprüche,
**dadurch gekennzeichnet, dass**
das die Empfangseinheit (31, 8) eine Empfangseinheit für GPS-Signale (6a) und/oder stationärer Signale (6b) oder ein Terminal (8) mit hinterlegten Felddaten ist.

15. Ballenablagesystem nach einem oder mehreren der vorangegangenen Ansprüche,
**dadurch gekennzeichnet, dass**
die Empfangseinheit (31) auf dem Schlepper (1), der Ballenpresse (2, 28, 33, 34) und / oder der Ballensammelvorrichtung (9) angeordnet ist.

16. Ballenablagesystem nach einem oder mehreren der vorangegangenen Ansprüche,
**dadurch gekennzeichnet, dass**
das Ballenablagesystem Länge und Verlauf der Ballenablagestrecke (20) ermittelt

## Claims

1. A bale deposit system for depositing bales (5) from an agricultural bale press (2) on a field (3), wherein the bale deposit system includes the deposit of at least one bale (5) in the immediate proximity of at least one further bale (5) deposited on the ground (3),
**characterised in that**
the bale deposit system includes dynamic adaptation of the bale deposit section (20) on the field (3).

2. A bale deposit system according to claim 1 **characterised in that** the bales (5) are deposited within a bale corridor (14) and/or in bale groups (15).

3. A bale deposit system according to one or more of the preceding claims **characterised in that** the width of the bale corridor (14) and the extent of the bale groups (15) depends on the bale section (20).

4. A bale deposit system according to one or more of the preceding claims **characterised in that** the bale deposit section (20) depends on limit values.

5. A bale deposit system according to one or more of the preceding claims **characterised in that** the limit values are the bale geometry and/or the bale density.

6. A bale deposit system according to one or more of the preceding claims **characterised in that** the bale geometry includes the bale diameter and/or the bale cross-section and/or the bale length.

7. A bale deposit system according to one or more of the preceding claims **characterised in that** the limit values are editable.

8. A bale deposit system according to one or more of the preceding claims **characterised in that** a bale collecting device (9) is associated with the bale press (2) and the bale connecting device (9) is emptied in the bale corridors (14) and/or in the bale groups (15).

9. A bale deposit system according to one or more of the preceding claims **characterised in that** the bale deposit section (20) is ascertained in dependence on different parameters.

10. A bale deposit system according to claim 9 **characterised in that** the parameters are the amount of swathe deposited on the ground, the local position of the swathe, the local position of a bale (5) which has already been deposited, the yield and/or field mapping data and/or the ground level of the field (3).

11. A bale deposit system according to claim 9 **characterised in that** bale deposit is effected manually or automatically in dependence on the parameters.

12. A bale deposit system according to one or more of the preceding claims **characterised in that** at least one transmitting unit (6, 6a, 6b) and receiving unit (31, 8) for receiving data is associated with the bale deposit system, wherein the bale deposit system determines the bale deposit section (20) in dependence on the data stored in the receiving unit (31, 8) and stores the positions of the deposited bales (5).

13. A bale deposit system according to claim 12 **characterised in that** the transmitting unit (6) is GPS satellites (6a) and/or stationary transmitting units (6b).

14. A bale deposit system according to one or more of the preceding claims **characterised in that** the receiving unit (31, 8) is a receiving unit for GPS signals (6a) and/or stationary signals (6b) or a terminal (8) with stored field data.

15. A bale deposit system according to one or more of the preceding claims **characterised in that** the receiving unit (31) is arranged on the tractor (1), the bale press (2, 28, 33, 34) and/or the bale collecting device (9).

16. A bale deposit system according to one or more of the preceding claims **characterised in that** the bale deposit system ascertains the length and the course of the bale deposit section (20).

## Revendications

1. Système de dépose de balles pour déposer des balles (5) d'une presse agricole à balles (2) sur un champ (3), le système de dépose de balles permettant de déposer au moins une balle (5) à proximité immédiate d'au moins une autre balle (5) déposée sur le sol du champ (3), **caractérisé en ce que** le système de dépose de balles comprend une adaptation dynamique du trajet de dépose de balles (20) sur le champ (3).

2. Système de dépose de balles selon la revendication 1, **caractérisé en ce que** les balles (5) sont déposées à l'intérieur d'un couloir à balles (14) et/ou dans des nids de balles (15).

3. Système de dépose de balles selon une ou plusieurs des revendications précédentes, **caractérisé en ce que** la largeur du couloir à balles (14) et l'extension des nids de balles (15) dépendent du trajet de dépose de balles (20).

4. Système de dépose de balles selon une ou plusieurs des revendications précédentes, **caractérisé en ce que** le trajet de dépose de balles (20) dépend de valeurs limites.

5. Système de dépose de balles selon une ou plusieurs des revendications précédentes, **caractérisé en ce que** les valeurs limites sont la géométrie des balles et/ou la densité des balles.

6. Système de dépose de balles selon une ou plusieurs des revendications précédentes, **caractérisé en ce que** la géométrie des balles englobe le diamètre des balles et/ou la section transversale des balles et/ou la longueur des balles.

7. Système de dépose de balles selon une ou plusieurs des revendications précédentes, **caractérisé en ce que** les valeurs limites sont modifiables.

8. Système de dépose de balles selon une ou plusieurs des revendications précédentes, **caractérisé en ce qu'**à la presse à balles (2) est associé un dispositif collecteur de balles (9), et le dispositif collecteur de balles (9) est vidé dans le couloir à balles (14) et/ou dans les nids de balles (15).

9. Système de dépose de balles selon une ou plusieurs des revendications précédentes, **caractérisé en ce que** le trajet de dépose de balles (20) est déterminé en fonction de divers paramètres.

10. Système de dépose de balles selon la revendication 9, **caractérisé en ce que** les paramètres sont la quantité andainée déposée sur le sol du champ, la position locale de l'andain, la position locale d'une balle déjà déposée (5), les données de rendement et/ou de cartographie du champ et/ou le niveau du sol du champ (3).

11. Système de dépose de balles selon la revendication 9, **caractérisé en ce que** la dépose des balles s'effectue automatiquement ou manuellement en fonction des paramètres.

12. Système de dépose de balles selon une ou plusieurs des revendications précédentes, **caractérisé en ce qu'**au système de dépose de balles sont associés au moins un module émetteur (6, 6a, 6b) et un module récepteur (31, 8) pour recevoir des données, le système de dépose de balles déterminant le trajet de dépose de balles (20) en fonction des données enregistrées dans le module récepteur (31, 8) et mémorisant les positions des balles déposées (5).

13. Système de dépose de balles selon la revendication 12, **caractérisé en ce que** le module émetteur (6) est constitué par des satellites GPS (6a) et/ou par des modules émetteurs stationnaires.

14. Système de dépose de balles selon une ou plusieurs des revendications précédentes, **caractérisé en ce que** le module récepteur (31, 8) est un module récepteur pour signaux GPS (6a) et/ou signaux stationnaires (6b) ou un terminal (8) avec données de champ enregistrées.

15. Système de dépose de balles selon une ou plusieurs des revendications précédentes, **caractérisé en ce que** le module récepteur (31) est disposé sur le tracteur (1), la presse à balles (2, 28, 33, 34) et/ou le dispositif collecteur de balles (9).

16. Système de dépose de balles selon une ou plusieurs des revendications précédentes, **caractérisé en ce que** le système de dépose de balles détermine la longueur et le tracé du trajet de dépose de balles (20).
